# EUROPÄISCHE PATENTSCHRIFT

(11) **EP 1 828 720 B1**
(45) Veröffentlichungstag und Bekanntmachung des Hinweises auf die Patenterteilung: **23.12.2015**
(21) Anmeldenummer: 05803253.3
(22) Anmeldetag: 17.10.2005
(51) Int. Cl.: G01D 5/14, G01D 5/16, G01R 33/00

(54) **MAGNETSENSORANORDNUNG**
MAGNETIC SENSOR ARRAY
ENSEMBLE CAPTEUR MAGNETIQUE

(30) Priorität: 15.12.2004 DE 102004060297
(43) Veröffentlichungstag der Anmeldung: 05.09.2007
(73) Patentinhaber: ROBERT BOSCH GMBH, 70442 Stuttgart (DE)
(72) Erfinder: RETTIG, Rasmus, 70839 Gerlingen (DE); VOGELGESANG, Birgit, 74379 Ingersheim (DE)
(86) Internationale Anmeldenummer: PCT/EP2005/055290
(87) Internationale Veröffentlichungsnummer: WO 2006/063884

(56) Entgegenhaltungen:
- US-A- 5 250 925
- US-A- 5 581 179
- US-B1- 6 265 865

## Beschreibung

### Stand der Technik

Die Erfindung betrifft eine Magnetsensoranordnung, insbesondere zur Sensierung einer Bewegung oder einer Position von linear oder rotatorisch bewegten Geberelementen, nach den gattungsgemäßen Merkmalen des Hauptanspruchs.

Es ist an sich bekannt, dass magnetfeldempfindliche Sensoren in vielen Bereichen Anwendung finden, bei denen eine robuste berührungsfreie Detektierung einer Bewegung oder einer Position gewünscht ist. Beispielsweise wird bei passiven Geberelementen, die aus einem weichmagnetischen Material bestehen, das magnetische Feld durch einen Arbeitsmagneten erzeugt, der fest mit dem Sensorelement verbunden ist. Das Sensorelement misst die Beeinflussung des Magnetfeldes des Arbeitsmagneten, die durch die Bewegung der beispielsweise eisenhaltigen Geberelemente hervorgerufen wird. Eine weitere Möglichkeit ist die Detektion von sich bewegenden magnetisierten Elementen, z.B. Multipolräder, durch die Feldänderung, die bei der Bewegung am Sensorort erzeugt wird.

Aus der US 5,250,925 A ist eine Magnetsensoranordnung mit mindestens einem magnetempfindlichen Sensorelement bekannt, dessen elektrische Eigenschaften in Abhängigkeit von einem Magnetfeld eines Arbeitsmagneten veränderbar sind, das durch ein bewegtes Geberelement beeinflussbar ist, wobei die Magnetsensoranordnung mindestens mit dem Sensorelement und dem Arbeitsmagneten in einer Primärverpackung aus Kunststoff vergossen ist. Diese Anordnung ist in einem Transfermodul untergebracht, das wiederum in einem anwendungsspezifischen Gehäuse verankert ist. Die Magnetsensoranordnung ist dabei über einen Dichtungsring in das Transfermodul eingefügt.

Aus der DE 197 53 775 A1 ist beispielsweise eine Magnetsensoranordnung mit einem Hallelement als Wegsensor und einem Arbeitsmagneten bekannt. In der DE 196 20 548 A1 ist eine Magnetsensoranordnung beschrieben, die einen kompakten Aufbau mit einem Mess-Chip und weiteren Bauteilen aufweist. Üblicherweise werden aktive Magnetsensoranordnung mit einem Arbeitsmagneten so aufgebaut, dass lediglich ein duroplastisch verpackter Mess-chip als Sensorelement in eine Konstruktion mit den zusätzlichen Elementen wie Arbeitsmagnet, Flussleitplättchen, Widerstände, Kondensatoren etc. so integriert wird, dass er nochmals vollständig umspritzt werden muss. Dabei wird der Mess-Chip je nach den Umspritzparametern, z.B. für ein Thermoplast, mit hohen Temperaturen von größer 300 °C und hohen Drücken von größer 300 bar ausgesetzt.

Der mechanische Druck, der auf den Mess-Chip durch diesen Prozess wirkt, kann zu elektronischen Signalstörungen beim Betrieb und auch zu mechanischen Beschädigungen des Chips führen. Es hat sich gezeigt, dass die Prozessbeherrschung für eine robuste Serienfertigung eine kritische Größe darstellt, so dass eine Robustheit und Reproduzierbarkeit des Herstellungsprozesses nicht sichergestellt werden kann.

### Vorteile der Erfindung

Eine Magnetsensoranordnung der eingangs angegebenen Art weist mindestens ein magnetfeldempfindliches Sensorelement auf, dessen elektrische Eigenschaften in Abhängigkeit von einem Magnetfeld eines Arbeitsmagneten über ein Geberelement veränderbar sind. Es wird in vorteilhafter Weise die Magnetsensoranordnung mindestens mit dem Sensorelement und dem Arbeitsmagneten in einer Primärverpackung aus Kunststoff vergossen. Zur endgültigen mechanischen Fixierung der Magnetsensoranordnung ist die Primärverpackung in Bereichen abseits des Sensorkopfes mit dem magnetfeldempfindlichen Sensorelement unter Durchführung der elektrischen Anschlüsse mit einer Sekundärverpackung umgebbar.

Erfindungsgemäß ist die Primärverpackung zur mechanischen Verankerung mit der Sekundärverpackung in den Verbindungsbereichen der beiden Verpackungen mit einer strukturierten Oberfläche versehen. Die Strukturierung kann dabei auf einfache Weise aus einer Längsriffelung bestehen oder auch gegebenen- falls zusätzlich eine Verjüngung oder eine Umfangserweiterung mitbeinhalten.

Die Primärverpackung besteht aus einem vorzugsweise duroplastischen Material, das während des Verpackungsprozesses keine dem als Mess-Chip ausgeführten Sensorelement beeinträchtigenden Temperaturen oder Drücke auferlegt. Als Sekundärverpackung ist dagegen auch ein Thermoplast oder gegebenenfalls auch ein Duroplast anbringbar.

Mit der Erfindung kann auf einfache Weise die Magnetsensoranordnung so ausgelegt werden, dass die duroplastische Primärverpackung den Mess-Chip und alle weiteren funktionsrelevanten Elemente umfasst und damit im Bereich des Mess-Chips bereits die elektrisch fertige Sensoranordnung darstellen kann. Die spätere Anbringung der Sekundärverpackung in einer vorzugsweise kundenspezifischen Form greift nur am hinteren Teil des Sensorkopfes an und hat somit keinen Einfluss mehr auf den Mess-Chip.

In vorteilhafter Weise ist somit gemäß der Erfindung ein dreidimensionales Verpackungskonzept für einen Sensorkopf realisierbar, der als Primärverpackung bereits die funktionsrelevanten Elemente der Sensoranordnung enthält und mechanisch schützt. Dieser ausgelieferte Sensorkopf ist nicht mehr in der üblichen planaren Anordnung, wie sie bei Verpackungen für integrierte Schaltungen eingesetzt wird, ausgeführt, sondern entspricht in seiner geometrischen Anordnung der späteren Applikation.

Die kundenspezifischen Anforderungen bezüglich des geometrischen und elektrischen Anschlusses der Sensoranordnung können dann später unabhängig vom Sensorkopf in der Sekundärverpackung realisiert werden. Damit entsteht ein modulares System, das es ermöglicht, den kundenspezifischen Entwicklungs- und Erprobungsaufwand zu reduzieren.

Weitere Vorteile bestehen vor allem in der Kostenreduzierung durch die Optimierung der Produktionskette, wie z.B. die Minimierung der Herstellungsschritte und des Testaufwandes, die Reduzierung der Beanspruchung des Mess-Chips, eine verbesserte Funktionen, z.B. hinsichtlich eines verbleibenden Luftspaltes und verbesserte Positioniertoleranzen.

In der Primärverpackung kann der Mess-Chip in vorteilhafter Weise auf ein flussleitendes Leadframe aufgebracht werden, über das auch die elektrische Kontaktierung nach außen geführt werden kann.

Bei einer neuen Kundenvariante der erfindungsgemäßen Magnetsensoranordnung muss demnach keine Sensorfunktionen erneut sichergestellt werden, es müssen nur noch konstruktive Änderungen der Sekundärverpackung neu entwickelt werden. Vorteile liegen in der Funktion des erfindungsgemäßen Sensorkopfes, dabei insbesondere in den verbesserten Positioniertoleranzen zwischen Magnet, Leadframe, magnetflussleitende Elemente, und Mess-Chip. Als Leadframes können sowohl nichtmagnetische als auch magnetische Materialien je nach Anforderung an die Funktion zum Einsatz kommen. Im Messchip können die Hall- oder XMR-,AMR-, GMR-, oder vergleichbare Technologien zum Einsatz kommen.

Einsatzgebiete der erfindungsgemäßen Magnetsensoranordnung sind vor allem Drehzahlfühler an einem Rad, Phasen- oder Drehzahlgeber an der Nocken- oder Kurbelwelle eines Fahrzeugs, Drehzahlsensoren in Getrieben und Linearweg, Winkel-, Näherungssensoren auf magnetischer Basis. Vor allem können preisgünstige Sensoren ohne eine eigene Platine bzw. ein getrenntes Gehäuse hergestellt werden. Auch optische Sensoren mit einer angepassten Primärverpackung sind hier denkbar.

### Zeichnung

Ausführungsbeispiele der Erfindung werden anhand der Zeichnung erläutert. Es zeigen:
Figur 1 einen Schnitt durch eine Magnetsensoranordnung, bei der der Sensorkopf mit dem obenliegenden Sensorelement in einer Primärverpackung untergebracht ist und die gesamte Anordnung dann weiterhin in einer Sekundärverpackung gehalten ist,
Figur 2 eine Abwandlung des Ausführungsbeispiels nach der Figur 1 mit einer seitlichen Ausrichtung des Sensorelements,
Figur 3 eine Ansicht eines zylindrischen Sensorkopfes mit einem auf einem Leadframe gehaltenen Mess-Chip als Sensorelement,
Figuren 4 und 5 detailliertere Ansichten des Inhalts der Primärverpackungen des Sensorkopfes und
Figuren 6a,6b und 7a,7b Beispiele für eine Strukturierung der Primärverpackung zur Verbindung mit der Sekundärverpackung.

### Beschreibung der Ausführungsbeispiele

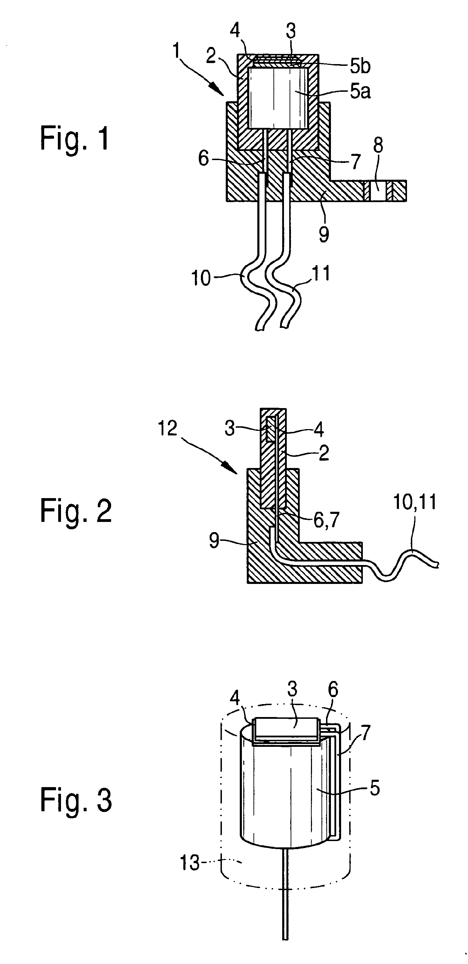

In Figur 1 ist ein erstes Ausführungsbeispiel einer Magnetsensoranordnung 1 gezeigt, die im wesentlichen aus einem in einem Duroplast als Primärverpackung vergossenen Sensorkopf 2 besteht. Oben ist ein Mess-Chip 3 als magnetfeldempfindliches Sensorelement vorhanden, dass auf einem hier nicht flussleitenden Leadframe 4 aufgebracht ist. Darunter befindet sich ein Arbeitsmagnet 5a mit einem Flussleitplättchen 5b, dessen Magnetfeld von einem außen vorbeibewegten, hier aber nicht dargestellten Geberelement beeinflusst wird. Weiterhin sind noch Anschlussbeine 6 und 7 des Leadframes 4 nach unten geführt.

Die eigentliche Montage, z.B. über eine Schraubverbindung, der Magnetsensoranordnung 1 erfolgt über eine unten mit dem Sensorkopf 2 verbundenen Sekundärverpackung 9 aus einem Thermoplast und eine Durchführung 8. Die elektrischen Anschlüsse 10 und 11 können in der Sekundärverpackung 9 fixiert und herausgeführt werden.

Aus Figur 2 ist ein ähnlich aufgebautes Ausführungsbeispiel einer Magnetsensoranordnung 12 zu entnehmen, bei der sich aber der Mess-Chip 3 seitlich für eine andere Detektionsart eines seitlichen Geberelements befindet. Diese Variante, die hier ohne zusätzlichen Arbeitsmagneten dargestellt ist, lässt einen einfacheren Konstruktionsansatz zu. Hierbei ist die Lesefläche des Sensorkopfes und somit auch des Mess-Chips 3 seitlich vorgesehen, so dass ein einfacheres planares Leadframe 4 eingesetzt werden kann. Zusätzliche Elemente können durch ein paralleles Versetzen von Bereichen des Leadframes 4 aufgenommen werden, ohne einen Einfluss auf die Position der Lesefläche zu haben.

Das Ausführungsbeispiel nach Figur 3 zeigt noch einen zylindrischen primärverpackten Sensorkopf 13, der ansonsten jedoch in vergleichbarer Weise wie der Sensorkopf 2 nach der Figur 1 aufgebaut ist; die den Sensorkopf 2 kennzeichnende Primärverpackung ist hier und in folgenden Figuren strich-punktiert dargestellt. Hier muss das Leadframe 4 zur Aufnahme des Magneten 5a mehrfach gebogen werden, damit die Anschlussbeine 6 und 7 unten austreten können.

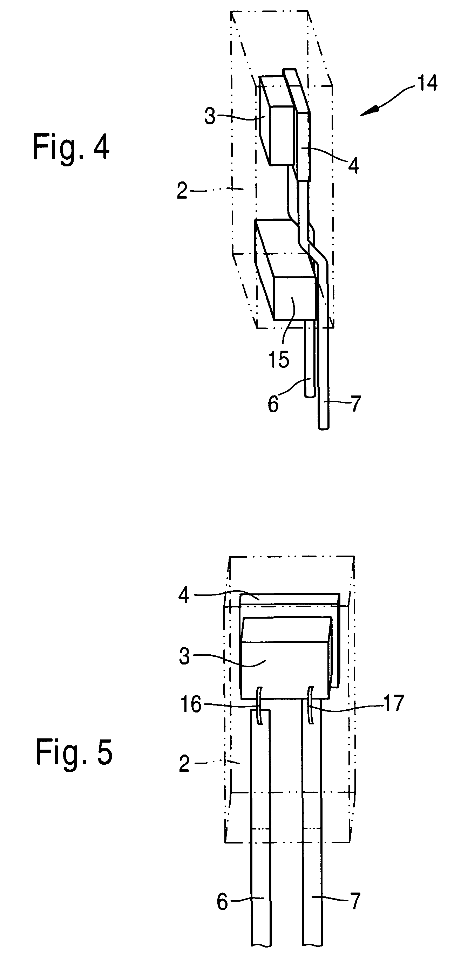

Aus Figur 4 ist noch ein Sensorkopf 14 mit einem zusätzlichen Bauelement 15 in der Primärverpackung und aus Figur 5 ist die Konfiguration des Mess-Chips 3 auf dem Leadframe 4 über Bonddrähte 16 und 17 erkennbar.

Bei den vorgestellten Ausführungsbeispielen der Erfindung ist vor allem der Sensorkopf 2, 13 oder 14 hervorzuheben, der alle funktionsrelevanten Elemente, wie z.B. Mess-Chip 3, Magnet 5 oder 5a, magnetflussleitende Elemente 5b, Leadframe 4 und eventuell benötigte zusätzliche Bauelemente 15, in einer Primärverpackung enthält. Alle erwähnten Elemente werden durch das Leadframe 4 zunächst in Position gehalten. Dies geschieht vor dem Umgießen mit der Primärverpackung entweder durch Kleben oder Klemmen.

Die Primärverpackung besteht vorzugsweise aus einem hoch reinen duroplastischen Kunststoff, der sowohl den Anforderungen des Komplettsensors als auch der Einzelelemente, z.B. des Mess-Chips 3, entspricht.

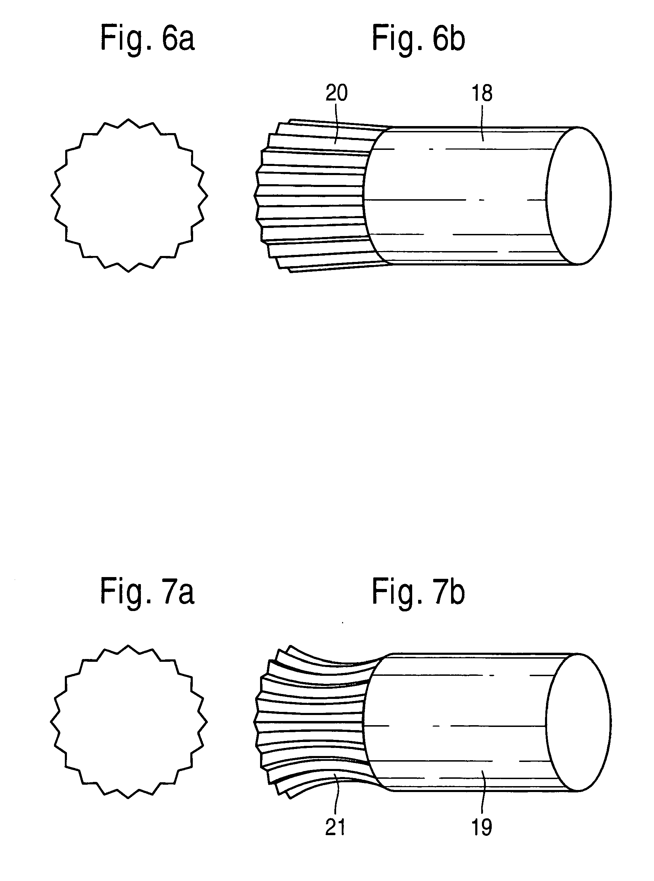

Zur Verbesserung der mechanischen Verankerung, der Abdichtung der Schnittstelle zwischen der duroplastischen Primärverpackung und der thermoplastischen Sekundärverpackung können nach den in Figur 6a,6b und Figur 7a,7b gezeigten Ausführungsbeispielen von zylindrischen Sensorköpfen 18 oder 19 zusätzliche Strukturen 20 oder 21 im Anschlussbereich des Sensorkopfes Anwendung finden.

Im Ausführungsbeispiel nach den Figur 6a,6b sind spitz ausgelegte Längsstrukturen 20 eingearbeitet, deren Strukturhöhen zum oberen Ende des Anschlussbereiches hin auf den Durchmesser des Grundkörpers des Sensorkopfes 18 hin auslaufen. Diese Strukturen 20 oder 21 sollen die Spritzgussmasse der Sekundärverpackung während des Spritzgussprozesses führen und damit eine definierte Ausrichtung der Glasfasern entlang der Strukturen 20 oder 21 in der Masse realisieren.

Bei den Figuren 7a,7b ist zusätzlich der mittlere Teil des Anschlussbereiches verjüngt, um eine bessere mechanische Verankerung der beiden Kunststoffe zu einander zu erreichen.

An diesem strukturierten Ende des Sensorkopfes 18 oder 19 kann der kundenspezifische elektrische Anschluss über Leitungen oder weitere Stromschienen bzw. Stecker erfolgen. Die kundenspezifische Form wird dann, wie zuvor beschrieben, durch ein zusätzliches Umspritzen des hinteren Bereiches des Sensorkopfes 18, 19 realisiert.

Der eingesetzte Kunststoff für die Sekundärverpackung kann hier sowohl ein Thermoplast als auch ein kostengünstiger Duroplast sein. Hierbei ist lediglich zu beachten, dass diese Sekundärumspritzung nur den hinteren Teil des Kopfes umschließt und der vordere Teil des Sensorkopfes, insbesondere die Lesefläche mit dem Mess-Chip 3, bei der Umspritzung unbeeinflusst bleibt. Die Vorteile dieser Sensorkonstruktion liegen in der verbesserten Robustheit des erfindungsgemäßen Sensors beim Sekundärumspritzen, da der sensitive Bereich des Sensorkopfes nicht den hohen Temperaturen und Drücken beim Spritzgießen ausgesetzt wird.

## Patentansprüche

1. Magnetsensoranordnung mit
- mindestens einem magnetfeldempfindlichen Sensorelement (3), dessen elektrische Eigenschaften in Abhängigkeit von einem Magnetfeld eines Arbeitsmagneten (5;5a) veränderbar sind, das durch ein bewegtes Geberelement beeinflussbar ist,
- wobei die Magnetsensoranordnung mindestens mit dem Sensorelement (3) und dem Arbeitsmagneten (5;5a) in einer Primärverpackung aus Kunststoff vergossen ist, und
- wobei zur endgültigen mechanischen Fixierung der Magnetsensoranordnung in der Sensoranwendung die Primärverpackung in Bereichen abseits des Sensorkopfes (2) mit dem magnetfeldempfindlichen Sensorelement (3) unter Durchführung der elektrischen Anschlüsse (6,7) mit einer Sekundärverpackung (9) umgebbar ist, **dadurch gekennzeichnet, dass**
- die Primärverpackung zur mechanischen Verankerung mit der Sekundärverpackung in den Verbindungsbereichen der beiden Verpackungen mit einer strukturierten Oberfläche (20,21) versehen ist.

2. Magnetsensoranordnung nach Anspruch 1, **dadurch gekennzeichnet, dass**
- die Primärverpackung aus einem vorzugsweise duroplastischen Material besteht, das während des Verpackungsprozesses keine dem als Mess-Chip (3) ausgeführten Sensorelement beeinträchtigenden Temperaturen oder Drücke auferlegt.

3. Magnetsensoranordnung nach Anspruch 1 oder 2, **dadurch gekennzeichnet, dass**
- als Sekundärverpackung (9) ein Thermoplast oder ein Duroplast anbringbar ist.

4. Magnetsensoranordnung nach einem der vorhergehenden Ansprüche, **dadurch gekennzeichnet, dass**
- die Strukturierung (20,21) aus einer Längsriffelung besteht.

5. Magnetsensoranordnung nach einem der vorhergehenden Ansprüche, **dadurch gekennzeichnet, dass**
- die Strukturierung (21) eine Verjüngung oder eine Umfangserweiterung mitbeinhaltet.

6. Magnetsensoranordnung nach einem der vorhergehenden Ansprüche, **dadurch gekennzeichnet, dass**
- in der Primärverpackung der Mess-Chip (3) auf ein nichtmagnetisches oder ferromagnetisches Leadframe (4) aufgebracht ist, über das die elektrische Kontaktierung (6,7) nach außen geführt ist.

7. Magnetsensoranordnung nach einem der vorhergehenden Ansprüche, **dadurch gekennzeichnet, dass**
- der magnetfeldempfindliche Sensorkopf sich an der Stirnseite der Primärverpackung befindet.

8. Magnetsensoranordnung nach einem der Ansprüche 1 bis 6, **dadurch gekennzeichnet, dass**
- der magnetfeldempfindliche Sensorkopf sich seitlich der Primärverpackung befindet.

9. Magnetsensoranordnung nach einem der vorhergehenden Ansprüche, **dadurch gekennzeichnet, dass**
- in der Primärverpackung zusätzliche passive oder aktive Bauelemente (15) angeordnet sind.

## Claims

1. Magnetic sensor array comprising
- at least one magnetic-field-sensitive sensor element (3), the electrical properties of which can be modified in accordance with a magnetic field of a working magnet (5; 5a) that can be influenced by a moved transmitter element,
- wherein the magnetic sensor array is potted at least along with the sensor element (3) and the working magnet (5; 5a) in a primary packaging of plastic, and
- wherein, for the final mechanical fixing of the magnetic sensor array in the application of the sensor, the primary packaging can be surrounded with a secondary packaging (9) in areas located away from the sensor head (2) along with the magnetic-field-sensitive sensor element (3), while at the same time establishing the electrical connections (6, 7), **characterized in that**
- for mechanical anchoring to the secondary packaging, the primary packaging is provided with a structured surface (20, 21) in the connecting regions of the two packagings.

2. Magnetic sensor array according to Claim 1, **characterized in that**
- the primary packaging consists of a preferably thermosetting material, which does not subject the sensor element configured as a measuring chip (3) to any adverse temperatures and pressures during the packaging process.

3. Magnetic sensor array according to Claim 1 or 2, **characterized in that**
- a thermoplastic or thermosetting material can be applied as the secondary packaging (9).

4. Magnetic sensor array according to one of the preceding claims, **characterized in that**
- the structuring (20, 21) consists of a longitudinal corrugation.

5. Magnetic sensor array according to one of the preceding claims, **characterized in that**
- the structuring (21) includes a tapering or a circumferential widening.

6. Magnetic sensor array according to one of the preceding claims, **characterized in that**
- in the primary packaging the measuring chip (3) is mounted on a non-magnetic or ferromagnetic leadframe (4), by way of which the electrical contacting (6, 7) is led to the outside.

7. Magnetic sensor array according to one of the preceding claims, **characterized in that**
- the magnetic-field-sensitive sensor head is located on the end face of the primary packaging.

8. Magnetic sensor array according to one of Claims 1 to 6, **characterized in that**
- the magnetic-field-sensitive sensor head is located to the side of the primary packaging.

9. Magnetic sensor array according to one of the preceding claims, **characterized in that**
- additional passive or active components (15) are arranged in the primary packaging.

## Revendications

1. Ensemble de capteur magnétique présentant
au moins un élément de détection (3) sensible au champ magnétique, dont les propriétés électriques peuvent être modifiées en fonction du champ magnétique d'un aimant de travail (5; 5a) sur lequel un élément émetteur mobile peut agir,
l'ensemble de capteur magnétique étant encapsulé au moins avec l'élément de détection (3) et l'aimant de travail (5; 5a) dans un emballage primaire en matière synthétique et
pour la fixation mécanique finale de l'ensemble de capteur magnétique dans l'application du capteur, les parties de l'emballage primaire autres que la tête de capteur (2) présentant l'élément de détection (3) sensible au champ magnétique et en laissant passer les raccordement électriques (6, 7) peuvent être encapsulées dans un emballage secondaire (9), **caractérisé en ce que**
pour son ancrage mécanique sur l'emballage secondaire, l'emballage primaire est doté d'une surface structurée (20, 21) dans les parties de liaison des deux emballages.

2. Ensemble de capteur magnétique selon la revendication 1, **caractérisé en ce que** l'emballage primaire est constitué d'un matériau de préférence thermodurcissable qui n'expose pas l'élément de détection réalisé comme puce de mesure (3) à des températures ou des pressions nocives pendant l'opération d'emballage.

3. Ensemble de capteur magnétique selon les revendications 1 ou 2, **caractérisé en ce qu'**un thermoplastique ou un plastique thermodurcissable peuvent être utilisés comme emballage secondaire (9).

4. Ensemble de capteur magnétique selon l'une des revendications précédentes, **caractérisé en ce que** la structuration (20, 21) est constituée d'une nervuration longitudinale.

5. Ensemble de capteur magnétique selon l'une des revendications précédentes, **caractérisé en ce que** la structuration (21) contient un rétrécissement ou un agrandissement de la périphérie.

6. Ensemble de capteur magnétique selon l'une des revendications précédentes, **caractérisé en ce que** dans l'emballage primaire, la puce de mesure (3) est placée sur un bâti conducteur (4) non magnétique ou ferromagnétique par lequel le contact électrique (6, 7) est prolongé vers l'extérieur.

7. Ensemble de capteur magnétique selon l'une des revendications précédentes, **caractérisé en ce que** la tête de capteur sensible au champ magnétique est située sur le côté frontal de l'emballage primaire.

8. Ensemble de capteur magnétique selon l'une des revendications précédentes, caractérisé selon l'une des revendications 1 à 6, **caractérisé en ce que** la tête de capteur sensible au champ magnétique est située sur le côté de l'emballage primaire.

9. Ensemble de capteur magnétique selon l'une des revendications précédentes, **caractérisé en ce que** des composants passifs ou actifs supplémentaires (15) sont disposés dans l'emballage primaire.
